(19) Europäisches Patentamt

European Patent Office

Office européen des brevets

(11) **EP 1 147 710 A2**

(12) **EUROPEAN PATENT APPLICATION**

(43) Date of publication:
**24.10.2001  Bulletin 2001/43**

(51) Int Cl.[7]: **A23L 1/212**

(21) Application number: **01201208.4**

(22) Date of filing: **03.04.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **17.04.2000  EP 00303205**

(71) Applicants:
- **UNILEVER N.V.**
  **3013 AL Rotterdam (NL)**
  Designated Contracting States:
  **BE CH DE DK ES FI FR GR IT LI LU MC NL PT SE TR AT CY**
- **UNILEVER PLC**
  **London EC4P 4BQ (GB)**
  Designated Contracting States:
  **GB IE**

(72) Inventors:
- **Moore, Stephen Raymond**
  **Sharnbrook Bedford MK44 1LQ (GB)**
- **Zhu, Shiping**
  **Sharnbrook Bedford MK44 1LQ (GB)**

(74) Representative: **Wurfbain, Gilles L. et al**
**Unilever N.V.,**
**Patent Division,**
**P.O. Box 137**
**3130 AC Vlaardingen (NL)**

(54) **Process for preparation of vegetable and fruit pieces**

(57)    The present invention relates to a process for the preparation of vegetable or fruit pieces, in particular to a process for preparing vegetable or fruit pieces which are more firm or which show reduced attrition/disintegration when subjected to shear, and which process does not require the addition of divalent cations such as calcium.

**EP 1 147 710 A2**

## Description

### Field of the invention

The present invention relates to a process for the preparation of vegetable or fruit pieces, in particular to a process for preparing vegetable or fruit pieces which are more firm or which show reduced attrition/disintegration when subjected to shear, and which process does not require the addition of divalent cations such as calcium.

### Background of the invention

Many food preparations contain fruit or vegetables. In some instances such fruit or vegetables are used in the form of a puree or sauce, in which whole fruits or vegetables or visible pieces or particles are not desired. However, there is an abundance of products where presence of whole fruits or vegetables or pieces or particles thereof are desired, such that these can be seen prior to consumption or that the consumer can feel them upon consumption. Even more so, in many cases presence of whole fruit or vegetables or particles (of certain firmness) thereof are seen as an indicator of high quality: being more "artisanal" or natural, or less processed. Examples of such products are jam with whole strawberries or cherries, tomato-based pasta sauce with chunks of tomato, meal sauces with pieces of broccoli or mushroom, etcetera.

When the fruit and vegetables such as the above are fresh, they usually have a certain firmness. However, preparing foodstuffs on an industrial scale usually implies subjecting such fruit and vegetables to some kind of heating step, for e.g. preservation purposes, or for inactivating endogenous enzymes. Such heating steps are generally detrimental to the firmness of the fruit or vegetables that are processed, and usually lead to fruit or vegetables (either whole or particles thereof) that have a less than desired firmness of the particles that survive the whole processing chain. Also, the whole fruit or vegetable or particles thereof are susceptible to damage as a result of the further treatment, resulting in attrition and/or disintegration of the whole fruit or vegetable or particle thereof. (Further treatment in this respect can be any known technique in food processing that results in some form and amount of shear rate, such as transportation, mixing and stirring, etcetera.) This may occur e.g. following heat treatment.

In the past, solutions have been proposed for increasing the firmness of fruit and vegetables or particles thereof. Up till now, all these methods involve the addition of divalent ions, such as calcium ions, e.g. in the form of a solution of calcium chloride, at some stage of the preparation process.

For example US 5,332,589 describes the use of applying a calcium chloride solution to tomato dices for increasing the firmness. EP 884002 describes the use of pectin methyl esterase (PME) together with a calcium salt for firming tomato pieces. US 4,504,504 discloses treating pectin-containing fruit and vegetable pieces with a polyuronic acid containing solution together with an aqueous solution of a divalent metal cation, such as calcium.

Although such processes may well be suitable for some purposes, there is a need for alternative processes for firming fruit or vegetables, either whole or particles or pieces thereof, that do not require the use of calcium ions (or other divalent metal cations) for firming fruit and vegetables or pieces thereof. Addition of calcium has a detrimental effect on taste, and addition is also limited to certain amounts due to food legislation in some countries. Furthermore, when addition of calcium is required, this introduces a further process step.

### Summary of the invention

Hence, there is a need for a process for treating fruits or vegetables or particles or pieces thereof that leads to increased firmness (when compared to a blank treatment), as can be measured or quantified by model tests for measuring sensitivity to attrition and/or disintegration, and which process does not require contacting the fruits or vegetables (whole or particles or pieces thereof) with a solution containing divalent cations, such as e.g. calcium.

Examples of biopolymer that do need divalent cations for thickening or gelling are alginate, pectin, and derivatives.

It has now been found that the above objective can at least in part be achieved by a process for the preparation of vegetable or fruit particles, which process involves contacting vegetable or fruit (in whole or particles thereof) during 1 second - 24 hours with an aqueous solution of a biopolymer, whereafter the particles are subjected to conditions under which said biopolymer (at least partially) thickens or sets to a gel, wherein the biopolymer is one that is capable to thicken or gel in the absence of divalent cations.

In the above, said biopolymer is preferably chosen from the group consisting of agar, gelatine, methyl cellulose, gum arabicum, gellan gum, carrageenan, amylose, starch, derivatives of the components mentioned and mixtures thereof.

The process may be applied to all sorts of fruit and vegetables, such as for example tomato, broccoli, carrot, mushroom, courgette, beans, apple, strawberry, cherry.

## Detailed description of the invention

The process according to the invention can be carried out either on whole fruit (e.g. strawberries, cherries, peeled tomato) or on particles or pieces thereof (e.g. dices or chunks of tomato, florets of broccoli, quarters of apple, etcetera). If applied on whole fruit and vegetables, these may be later cut or comminuted to pieces or particles, if so desired.

In the process according to the invention, an aqueous solution is prepared of a suitable biopolymer (or is already present), whereafter the fruit and vegetables (whole or in particles or pieces) are contacted with the biopolymer solutions for 1 second to 24 hours (preferably 30 second to 30 minutes) under conditions that the biopolymer is still not gelled or thickened, whereafter conditions are applied to the so-treated fruit or vegetable particles under which the biopolymer that is used will thicken or gel. For example, when agar is used, the fruit or vegetables are contacted with an agar solution at a temperature the agar is soluble, (above $T_{gel}$) for a certain amount of time, whereafter the treated fruit or vegetables are cooled to a temperature below $T_{gel}$ of the agar. Similar procedures are suitable for e.g. gelatine, gellan, carrageenan, etcetera.

In the process according to the invention, the aqueous solution of biopolymer may contain the biopolymer in a concentration of 0.1 to 10 wt%, preferably 0.5 to 5 wt%.

The fruit or vegetables can be contacted with the aqueous biopolymer solution in any known manner, e.g. by spraying or immersion.

The invention further relates to the fruits or vegetables (whole or particles or pieces thereof) which fruit- or vegetables (whole or particles) contain 0.01%-1% by weight of a biopolymer, which biopolymer is, prior to gelling or thickening, capable to thicken or gel in the absence of divalent metal cations. The invention also relates to edible composition containing above mentioned fruit- or vegetables (whole or particles thereof).

In the above referred fruits or vegetables (whole or particles or pieces thereof) the biopolymer is preferably selected from the group consisting of agar, gelatine, methyl cellulose, gum arabicum, gellan gum, carrageenan, amylose, starch, derivatives of the components mentioned and mixtures thereof. The fruits and vegetables in the above are for example tomato, broccoli, carrot, courgette, mushroom, beans, apple, strawberry, cherry, or edible compositions containing said fruit and vegetables (whole or pieces thereof), such as jam. In the fruits and vegetables according to the invention the intra-cellular structure is preferable at least partly intact.

Although it is preferred to achieve the benefits according to this invention by contacting the fruit or vegetables (whole or in part) with an aqueous solution of a biopolymer, whereafter the particles are subjected to conditions under which said biopolymer (at least partially) thickens or sets to a gel, wherein the biopolymer is one that is capable to thicken or gel in the absence of divalent cations, it is not excluded to have such divalent cations present. Hence, the invention also relates to e.g. a process in which tomato dices are subjected to an aqueous solution of agar (1 wt%) and calcium chloride (1 wt%), for 5 minutes at 100°C, after which the dices were cooled to room temperature to allow the agar to thicken or gel. Although the agar sets to a gel regardless of the presence of the calcium chloride, the latter may be present if so desired.

The process according to the present invention may be part of a larger process for preparing edible compositions in which fruit and/or vegetable particles are required or preferred, such as a process for preparing tomato-based pasta sauce containing dices of tomato, or a process for preparing strawberry jam containing strawberries (whole or particles).

The invention is further illustrated by the following examples, which are to be understood as non-limiting.

## Example 1

Apple pieces have been subjected to treatment with agar, gellan gum, and compared with a blank treatment.

For measuring the firming effect, a test device was developed in which apple pieces were subjected to shear, by rotation of an apple particle with a certain speed (2000 rpm, resulting in approximately a shear of 2750 Pa) in a viscous liquid (mixture of glucose and water). As a result of the shear applied, attrition of the apple particles will be the result, which in its turn results in size reduction of the particle. Using a digital camera, sizes were measured at various time intervals for a duration up to 10 minutes after starting the test, and expressed as a percentage of the size of the particle before applying shear, and as such give a relative indication of firmness.

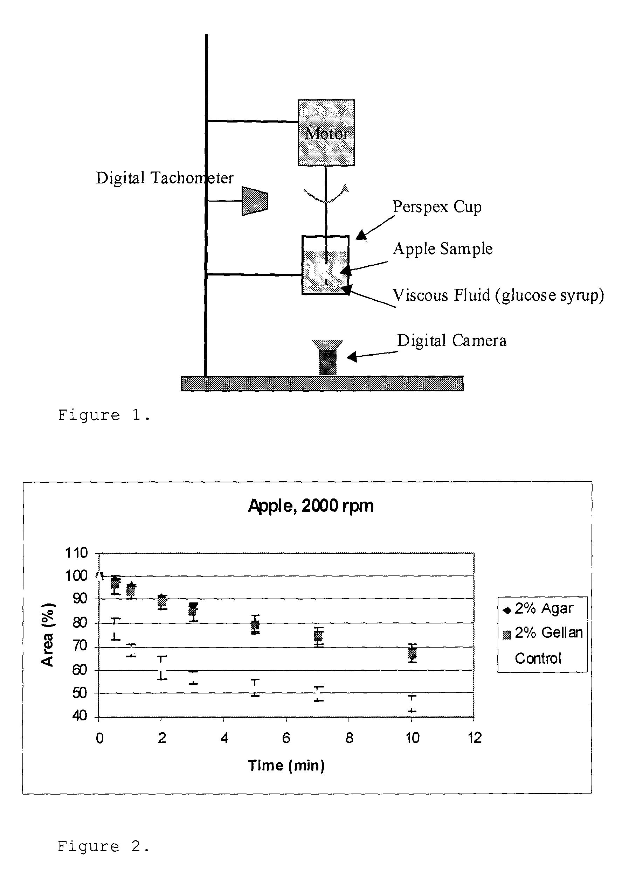

The testing device is schematically given in figure 1. In this device, apple tissue is sheared in the Perspex cup containing a viscous liquid (mixture of water and glucose syrup).

For this experiment, pieces of apple (Golden Delicious, approx. size of particle: diameter = 9.0 mm and thickness 3.5 mm) were cooked in water at 100°C for 10 minutes, then cooled in water of ambient temperature for 1 minute. Samples were then immersed for 10 minutes in aqueous solutions a or b at 55°C, and then dried in air at ambient temperature for 10 minutes.

Solutions:

a       agar, 2 wt%, (Branwell, 1253)
b       gellan, 2 wt%, (Kelco Biopolymers, Kelcogel 'F') and 0.5 wt% NaCl

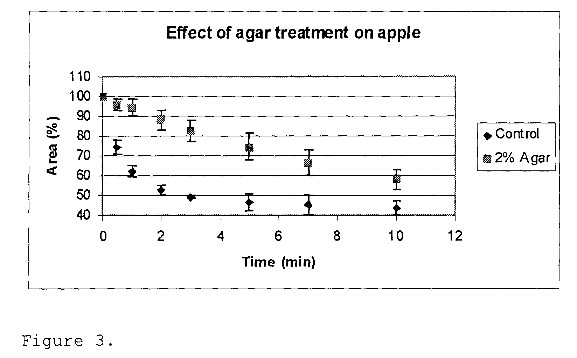

As a reference, particles were taken that were not subjected to one of the solutions a or b, but were subjected to the preceding cooking step for 10 minutes and subsequent cooling step for 1 minute only.
The results are set out in figure 2.

**Example 2**

In order to check whether subjecting the particles to be measured to the immersion (at 55°C) after the initial cooking step had a significant influence, experiment 1a was repeated, but now the reference treatment was done exactly as example 1a, with the exception that agar was not present in the reference (i.e. the reference sample was also subjected to the immersion in water for 10 minutes at 55°C, and then air dried). The results are set out in figure 3.

**Examples 3 and 4**

For this examples, firming of tomato (whole, peeled for example 3 and canned diced for example 4) has been tested by monitoring the maximum shear stress, $\tau_{max}$, a particle can withstand before disintegration occurs as a result of applied shear. Disintegration is to be understood as loss of large fragments from the tomato particle, and typically takes less than 30 seconds (in the test set up, whereas attrition (examples 1 and 2) relates to gradual size reduction. A similar test set up was used as in examples 1 and 2.
The shear rate was calculated using the set up as in figure 1, and formulation (1):

$$(1) \qquad \dot{\gamma} = \frac{2\pi R_i}{60} \times \frac{n}{R_a\text{-}R_i}$$

In formula (1) :

$R_a$ is of the vial and is from 8.0 to 10.5 mm
$R_i$ is of the tomato particle and is from 4.5-5.0 mm
n is the speed of the motor in rpm.

The shear stress on the side of the surface is given by formula (2) :

$$(2) \qquad \tau = \dot{\gamma} \times \eta$$

wherein $\eta$ the viscosity of the glucose syrup aqueous solution is.
The following experiments have been carried out:

| Example | Tomato species | Thermal treatment | $\tau_{max}$ (Pa) |
|---------|----------------|-------------------|-------------------|
| 3a | Fresh tomato | None (raw) | > 600* |
| 3b | Fresh tomato | 100°C/5 min. | 100-200 |
| 3c | Fresh tomato + 1 % agar | 100°C/5 min. | > 600* |
| 3d | Fresh tomato + 1% methyl cellulose | 100°C/5 min. | > 600* |
| 4e | Canned dice | 100°C/5 min. | ~ 1000 |
| 4f | Canned dice + 1 % agar | 100°C/5 min. | > 2000* |

* no disintegration is observed up to the shear stress value cited.

The canned dice are commercially available dice, which in the factory had been treated with calcium chloride. For examples 3a-3d, the viscosity of the liquid was about 1 Pa.s (solution of about 72.2 wt% glucose in 27.8 wt% water), for 4a-4b viscosity was increased to about 4 Pa.s (solution of about 76.3 wt% glucose in 23.7 wt% water). The methyl cellulose was from Dow Chemical (CELACOL M20).

In 3a above, pieces of fresh, raw tomato were used, without further thermal treatment.

In 3b above, fresh, raw tomato particles were cooked for 5 minutes at 100°C in water.

In 3c above, fresh, raw tomato particles were cooked for 5 minutes at 100°C in a 1 wt% agar solution in water.

In 3d above, methyl cellulose was dissolved at room temperature, then the pieces of fresh, raw tomato were immersed for 10 minutes at room temperature, and then cooked (by immersion in clean water) for 5 minutes at 100°C.

In 4a above, tomato dices from a can were used, which were cooked for 5 minutes at 100°C in water (by immersion).

In 4b above, tomato dices from a can were cooked for 5 minutes at 100°C in a 1 wt% agar solution in water (by immersion).

## Claims

1. Process for the preparation of vegetable or fruit particles, which process involves contacting vegetable or fruit (in whole or particles thereof) during 1 second - 24 hours with an aqueous solution of a biopolymer, whereafter the particles are subjected to conditions under which said biopolymer (at least partially) thickens or sets to a gel, wherein the biopolymer is one that is capable to thicken or gel in the absence of divalent cations.

2. Process according to claim 1, wherein the biopolymer is selected from the group consisting of agar, gelatine, methyl cellulose, gum arabicum, gellan gum, carrageenan, amylose, starch, derivatives of the components mentioned and mixtures thereof.

3. Process according to claim 1 or 2, wherein whole fruit or vegetables are subjected to contact with the aqueous biopolymer solution, which whole fruit or vegetables may optionally be comminuted to particles of the vegetable or fruit at a later stage.

4. Process according to claim 1 or 2, wherein the fruit or vegetables are subjected to contacting with the aqueous biopolymer solution, which vegetable or fruit are in the form of particles.

5. Process according to claim 4, wherein the particles are dices.

6. Process according to claim 1-5, wherein the fruit or vegetable is tomato, broccoli, carrot, mushroom, beans, courgette, apple, strawberry, cherry.

7. Process according to claim 1-6, wherein the particles are contacted with the biopolymer solutions for 30 seconds - 30 minutes.

8. Process according to claim 1-7, wherein the aqueous solution of biopolymer contains the biopolymer in a concentration of 0.1 to 10 wt%.

9. Edible composition containing fruit- or vegetable particles, which fruit- or vegetable particles contain 0.01%-1% by weight of a biopolymer, which biopolymer is, prior to gelling or thickening, capable to thicken or gel in the absence of divalent metal cations.

10. Edible composition according to claim 9, wherein the biopolymer is selected from the group consisting of agar, gelatine, methyl cellulose, gum arabicum, amylose, starch, derivatives of the components mentioned and mixtures thereof.

11. Edible composition according to claim 9 or 10, wherein the fruit or vegetable is tomato, broccoli, carrot, mushroom, beans, courgette, apple, strawberry, cherry.

12. Composition according to claim 9-11, wherein the intra-cellular structure is at least partly intact.

Figure 1.

Figure 2.

Figure 3.